# EUROPÄISCHE PATENTSCHRIFT

(11) **EP 1 996 656 B1**
(45) Veröffentlichungstag und Bekanntmachung des Hinweises auf die Patenterteilung: **28.10.2009**
(21) Anmeldenummer: 07727019.7
(22) Anmeldetag: 16.03.2007
(51) Int. Cl.: C09D 5/20, B65B 33/00, B08B 17/04, B05D 5/00

(54) **HEISS-FLÜSSIGES POLYMER ALS SCHUTZSCHICHT AUF KUNSTSTOFFOBERFLÄCHEN**
POLYMER WHICH IS FREE-FLOWING WHEN HOT AS A PROTECTIVE LAYER ON PLASTICS SURFACES
POLYMERE LIQUIDE A CHAUD UTILISE EN TANT QUE COUCHE DE PROTECTION POUR SURFACES PLASTIQUES

(30) Priorität: 17.03.2006 DE 102006012392
(43) Veröffentlichungstag der Anmeldung: 03.12.2008
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE)
(74) Vertreter: Isenbruck, Günter
(86) Internationale Anmeldenummer: PCT/EP2007/052541
(87) Internationale Veröffentlichungsnummer: WO 2007/107531

(56) Entgegenhaltungen:
- WO-A-01/27212
- DE-A1- 3 435 906

## Beschreibung

Die vorliegende Erfindung betrifft Verfahren zur Erzeugung einer abziehbaren Schutzschicht auf die Kunststoffoberfläche eines Gegenstandes, Gegenstände mit solchen Schutzschichten sowie die Verwendung besagter Polymere als Schutzschicht.

Bei der Herstellung und dem Transport von Halbfertig- oder Fertigwaren ist es häufig erforderlich, deren Oberfläche gegen äußere Einflüsse wie Licht, Feuchtigkeit, Verschmutzung, mechanische Beschädigung oder dergleichen zu schützen.

Dies gilt insbesondere für Oberflächen, von Waren oder Gegenständen, die später dem Betrachter visuell zugänglich sind. Meist unterscheidet sich aus diesem Grund eine solche Oberfläche von weiteren Oberflächen, die sich beispielsweise im Inneren des Gegenstandes befinden. Bei den zu schützenden Oberflächen handelt es sich daher häufig auch um solche, die eine wie auch immer geartete Dekorierung darstellen. Hierbei sind beispielsweise die Außenflächen von Möbeln, Fensterrahmen sowie Türen zu nennen.

Typischerweise werden diese mit einer Schutzfolie versehen und sofern es sich um Halbfertig-Ware handelt, wird die Schutzfolie vor dem Zusammenbau des fertigen Gegenstandes entfernt. Darüber hinaus kann aber auch der bereits gefertigte Gegenstand mit Schutzfolien versehen sein, die meist nach Aufstellen oder Montage des Gegenstandes (wie ein Fensterrahmen, ein Möbelstück oder ein Türblatt) entfernt werden.

Solche Schutzfolien sind im Stand der Technik bekannt.

DE-A 34 35 906 beschreibt beispielsweise Platten, die insbesondere aus einem thermoplastischen Kunststoff bestehen und die auf wenigstens einer Oberfläche mit einer Schutzfolie, welche Perforationen aufweist, versehen sind.
Ein wesentlicher Punkt bei der Auswahl einer Schutzfolie ist neben ihrer Eigenschaft zum Schutze der Oberfläche eines Gegenstandes die Möglichkeit, diese leicht aufzubringen, wobei eine ausreichende Haftfestigkeit erreicht wird, und diese anschließend jedoch auch wieder vergleichsweise leicht entfernbar ist. Aufgrund der adhäsiven Eigenschaften von Kunststofffolien bilden diese prinzipiell ein geeignetes Material und werden deshalb sehr häufig eingesetzt. Jedoch wird typischerweise zur Verstärkung der Adhäsion ein Haftklebstoff verwendet.

Solche Folien haben jedoch den Nachteil, dass diese leicht verrutschen und gegebenenfalls knittern können. Zudem ist deren Aufbringen mit einem gewissen Aufwand verbunden. Weiterhin können solche Folien beispielsweise durch Lagerung in ihren Adhäsionseigenschaften negativ beeinträchtigt sein, so dass möglicherweise deren Entfernen nicht mehr rückstandsfrei möglich ist.

Es besteht daher ein Bedarf an alternativen Systemen, welche Kunststoffoberflächen effektiv schützen können und insbesondere leichter handhabbar als Schutzfolien sind. Neben solchen Systemen sind weiterhin insbesondere Verfahren zur Erzeugung solcher abziehbaren Schutzschichten erforderlich.

Eine Aufgabe der vorliegenden Erfindung liegt somit darin, Systeme, die einen wieder entfernbaren Schutz von Kunststoffoberflächen darstellen, sowie Verfahren zur Erzeugung solcher schützenden Oberflächen bereitzustellen.

Die Aufgabe wird gelöst durch ein Verfahren nach Anspruch 1.

Die Aufgabe wird ebenfalls gelöst durch einen Gegenstand nach Anspruch 12.

Es wurde nämlich überraschenderweise gefunden, dass sich solche Polymere, welche in heißem Zustand flüssig und bei Raumtemperatur fest sind, auf Kunststoffoberflächen als ablösbare Schutzschicht eignen. Solche Polymere sind insbesondere auch vorteilhaft gegenüber Polymer- oder Präpolymerdispersionen, die immer den Einsatz von Lösemitteln erfordern. Darüber hinaus sind solche Polymere, welche Einkomponentensysteme darstellen, einfacher zu handhaben als Mehrkomponentensysteme.

Solche Polymere sind im Stand der Technik als solche bekannt. Sie werden häufig als Schmelzklebstoffe (auch "hot melts" oder "Hotmelts") bezeichnet. Wie schon der Name sagt, dienen solchen Stoffe als Klebstoffe und sind beispielsweise in der Verpackungsindustrie zum Verkleben von Papier oder in der Möbel- und Holzindustrie beispielsweise als Laminat sowie zum Buchbinden geeignet und bekannt. Hierbei bedingt ihre Haftung häufig das Vorhandensein eines porösen Materials wie Stoff, Leder, Holz, Papier und Geweben, um ohne weitere Vorbehandlungsschritte ihre klebende Eigenschaft entfalten zu können.

Solche hot melts basieren häufig auf Polyamiden, Polyethylenen, amorphen Poly-αolefinen, Ethylenvinylacetat-Copolymeren, Polyester, Polyurethan oder Copolyamid-Elastomeren.

Zur Verklebung von Kunststoffoberflächen werden diese Schmelzklebstoffe ebenfalls eingesetzt. Hierbei wird jedoch häufig ein Vorbehandlungsschritt zur Erhöhung der Adhäsion eingesetzt. Dieser Vorgang wird meist "Primern" genannt und ist häufig damit verbunden, dass die Kunststoffoberfläche entsprechend aufgerauht wird, um eine ausreichende Adhäsion zu erreichen.

Die Leistung der vorliegenden Erfindung ist darin zu sehen, dass neben ihrer klebenden Eigenschaft solche heiß-flüssigen, bei Raumtemperatur festen Polymere jedoch auch geeignet sind, als Schutzschicht zu dienen, die eine ausreichende Haftung - beispielsweise während des Transports oder der Lagerung - aufweisen, jedoch dann ebenfalls leicht ablösbar sind und so als Schutzschicht fungieren können.

Um die im Rahmen der vorliegenden Erfindung verwendeten Polymere als Schutzschicht einsetzen zu können, sollte darauf geachtet werden, dass deren Klebeeigenschaft gegenüber der zu schützenden Kunststoffoberfläche ausreichend vermindert ist.

Aufgrund der glatten Oberfläche von Kunststoffen ist dies normalerweise im Rahmen der vorliegenden Erfindung gegeben. Sollte dies bei der Wahl des entsprechenden Polymers ausnahmsweise nicht der Fall sein, sind dem Fachmann Mittel bekannt, die Klebewirkung dieser Polymere entsprechend derart herabzusetzen, dass diese als Schutzschicht eingesetzt werden können.

Eine bereits genannte Maßnahme liegt darin, dass die Kunststoffoberfläche nicht, wie beim Verkleben üblich, geprimert wird. Darüber hinaus kann durch geeignete Wahl der Temperatur des Polymers beziehungsweise der Kunststoffoberfläche die Klebewirkung im erforderlichen Maß reduziert werden. Dabei gilt allgemein, dass je geringer die Temperatur desto geringer ebenfalls die Klebewirkung sein wird. Eine geeignete Temperatur kann durch eine einfache Messreihe ermittelt werden.

Ein bevorzugtes Polymer im Rahmen der vorliegenden Erfindung stellt ein solches dar, welches ein Polymer auf Basis eines feuchtigkeitsvernetzenden Polyurethans ist.

Im Rahmen der vorliegenden Erfindung bedeutet der Begriff "heiß-flüssig", dass das Polymer in flüssigem Zustand auf die zu schützende Kunststoffoberfläche aufgebracht wird. Darüber hinaus soll das Polymer bei Raumtemperatur fest sein und einen Film bilden können. Durch die Filmbildung ist gewährleistet, dass eine geschlossene Schicht erzeugt werden kann, welche entsprechend als Schutzschicht dient. Die Festigkeit bei Raumtemperatur wird zum einen durch das Abkühlen erreicht und kann jedoch darüber hinaus ebenfalls durch chemische Reaktion mit der Umgebung zusätzlich gefördert werden. So kann beispielsweise im Falle eines Polyurethan basierten Polymers die Abkühlung mit der Reaktion von im Polymer vorhandenen Isocyanatgruppen mit der Umgebungsfeuchtigkeit zu einer weiteren Vernetzung des Polymers und somit zur Verfestigung beitragen. Ebenso kann für entsprechende Systeme eine Strahlenhärtung - wie UV-Härtung - durchgeführt werden.

Die im Rahmen der vorliegenden Erfindung eingesetzten Polymere weisen typischerweise einen Schmelzpunkt im Bereich von 50 bis 200 °C auf.

Im Rahmen der vorliegenden Erfindung wird vorzugsweise unter "Raumtemperatur" eine Temperatur verstanden, die im Bereich von 0 °C bis 45 °C, vorzugsweise im Bereich von 5 °C bis 40 °C und insbesondere im Bereich von 10 °C bis 35 °C liegt. Eine beispielhafte Temperatur als Raumtemperatur liegt bei 20 °C oder 25 °C.

Ein Vorteil des Polymers für die vorliegende Erfindung liegt darin, dass das Aufbringen in flüssigem Zustand erfolgt. Hierdurch ist eine Vereinfachung in der Handhabung beim Aufbringen einer Schutzschicht im Vergleich zu Schutzfolien möglich.
Das Polymer für die vorliegende Erfindung kann vorzugsweise in einfacher Weise mit Hilfe einer Walze, eines Rakels, einer Schlitzdüse oder durch Aufsprühen aufgebracht werden. Hierbei ist die Verwendung von Walze, Rakel oder Schlitzdüse bevorzugt.

Ein solcher Schritt kann leicht in die bestehende Fertigungsanlage zur Erzeugung von Halbfertig- oder Fertigerzeugnissen eingegliedert werden. Ein spezielles Handling der zu beschichtenden Gegenstände ist prinzipiell nicht erforderlich.

Es kann jedoch in bestimmten Fällen zweckdienlich sein, dass ein "Transferauftrag" erfolgt. Hierbei wird das Polymer zunächst auf ein Transfermittel aufgebracht, das seinerseits die gebildete Polymerschicht oder das Polymermaterial auf die Kunststoffoberfläche des entsprechenden Gegenstandes aufbringt. Bei dem Transfennittel kann es sich beispielsweise um eine Walze oder mehrere Walzen beziehungsweise um ein Band oder mehrere Bänder oder Kombinationen davon handeln.

Hierbei kann beispielsweise gewährleistet werden, dass der Auftrag auf das Transfermittel, d.h. die Applikation des heiß-flüssigen Polymers, zeitlich von der Erzeugung der ablösbaren Schutzschicht auf der Kunststoffoberfläche des Gegenstandes getrennt ist. Dies kann dazu dienen, dass das Polymer teilweise abkühlen kann, und so beispielsweise seine Haftkraft reduziert wird, ohne dass auf eine höhere Temperatur zum homogenen Aufschmelzen des heiß-flüssigen, bei Raumtemperatur festen Klebstoffes verzichtet werden müsste. Ebenso können diese unterschiedlichen Temperaturen sinnvoll sein, wenn die Kunststoffoberfläche des Gegenstandes hitzeempfindlich ist und die höhere Temperatur beim homogenen Schmelzen entsprechend schädlich wäre.

Im Falle eines Polymers auf Basis eines feuchtigkeitsvemetzenden Polyurethans kann die zeitliche Trennung auch dazu dienen, dass das Polymer bereits "anreagiert" ist, bevor es den Film auf der Kunststoffoberfläche des Gegenstandes bildet und somit dessen Haftkraft ebenfalls vermindert wäre.

Die Schichtstärke der aufzubringenden Schutzschicht kann in Abhängigkeit des zu schützenden Gegenstandes variabel gewählt werden. Hierin liegt ein weiterer Vorteil der vorliegenden Erfindung, da bei dem aufzubringenden Polymer die aufgebrachte Schichtstärke beispielsweise einfach dadurch geändert werden kann, dass der Gegenstand, dessen Kunststoffoberfläche geschützt werden soll, auf einem Band transportiert wird und so die Schichtstärke beim Aufbringen durch die Laufgeschwindigkeit des Bandes reguliert werden kann. Ebenso ist die Schichtbreite einfach einzustellen. Bei Verwendung von Schutzfolien ist hier ein weitaus höherer Aufwand zu treiben und die entsprechenden Folienrollen müssen gegebenenfalls ausgetauscht werden, bevor eine andere Schichtstärke eingestellt werden kann. Analoges gilt für die Breite von Schutzfolien, die ebenfalls vorgegeben ist.
Zweckmäßigerweise weist die Schutzschicht eine mittlere Schichtstärke im Bereich von 20 bis 150 µm auf.

Der Begriff "mittlere Schichtstärke" bedeutet im Rahmen der vorliegenden Erfindung, dass die Stärke der Schicht variieren kann und es im Rahmen der vorliegenden Erfindung ausreicht, wenn die über die gesamte zu schützende Fläche gemittelte Schichtstärke im angegebenen Bereich liegt. Vorzugsweise weist jedoch die Schutzschicht an keiner Stelle eine Schichtstärke auf, die außerhalb des angegebenen Bereiches liegt. Insbesondere bevorzugt liegt die mittlere Schichtstärke im Bereich von 30 bis 60 µm.

Wie bereits oben ausgeführt wurde, wird das Polymer für die vorliegende Erfindung in heiß-flüssigem Zustand aufgebracht. Die Temperatur des Polymers beim Aufbringen liegt vorzugsweise im Bereich von 80 °C bis 190 °C. Weiterhin bevorzugt liegt die Temperatur im Bereich von 100 °C bis 130 °C. Bei Verwendung eines Transfermittels kann die Temperatur auch höhere Werte annehmen, beispielsweise bis 220 °C, wobei vorzugsweise das Aufbringen auf die zu schützende Kunststoffoberfläche jedoch im oben angegebenen Temperaturbereich erfolgt.

Darüber hinaus kann der Gegenstand, dessen Kunststoffoberfläche mit einer Schutzschicht versehen werden soll, erwärmt sein. Vorzugsweise ist dies jedoch nicht der Fall.

Aufgrund der Verwendung des Polymers in heiß-flüssigem Zustand ist gewährleistet, dass dieser sich auf der Kunststoffoberfläche des zu schützenden Gegenstandes gleichmäßig verteilt. Darüber hinaus kann eine Verteilung abhängig von der Art und Weise des Aufbringens erfolgen.

Nachdem das Polymer in heiß-flüssigem Zustand auf die Kunststoffoberfläche des Gegenstandes aufgebracht wurde und gegebenenfalls eine weitere Verteilung, beispielsweise durch Glätten, des Polymers erfolgte, wird der gebildete Film, welcher die Schutzschicht darstellt, auf Raumtemperatur gebracht. Durch das Abkühlen erfolgt ein physikalisches Aushärten des Polymers durch Viskositätsanstieg und Kristallisation. Darüber hinaus kann wie oben bereits ausgeführt, die Aushärtung mit weiteren Prozessen, wie chemischen Reaktionen, beispielsweise mit Luftfeuchtigkeit und/oder Strahlung, zusätzlich erfolgen. Der Abkühlvorgang kann gegebenenfalls beschleunigt oder verlangsamt werden. Dies kann beispielsweise durch Heißluftgebläse beziehungsweise Kühlelemente erfolgen.

Ebenso kann bei dem Abkühlprozess die beschichtete Oberfläche der Luftfeuchtigkeit ausgesetzt sein oder die Feuchtigkeit kann durch künstliches Herabsetzen, beispielsweise durch Entfeuchter, vermindert sein.

Die Luftfeuchtigkeit kann beispielsweise bei der Verwendung eines Polymers auf Polyurethanbasis eine weitere Aushärtung erreichen.

Ein weiterer Gegenstand der vorliegenden Erfindung liegt somit darin, dass der Gegenstand beim Abkühlen und Aushärten der Raumluftfeuchtigkeit und -temperatur ausgesetzt ist.

Die erforderliche Zeit, die aufgewendet werden sollte, um das heiß-flüssige Polymer auf Raumtemperatur abzukühlen, kann durch geeignete Versuche ermittelt werden. Wie dies zu geschehen hat, ist dem Fachmann geläufig. Es ist nicht unbedingt erforderlich, dass vor einer weiteren Verwendung des Gegenstandes bereits Raumtemperatur erreicht wurde. Es ist ebenso je nach verwendetem Polymer möglich, bereits vorher den Gegenstand weiter zu benutzen, um ihn beispielsweise zu stapeln, falten, aufzurollen oder in einer anderen Art und Weise zu kompaktieren.

Hierfür sollte insbesondere im Falle, dass das Polymer auf Polyurethanbasis aufgebaut ist, eine Zeitspanne von mindestens ca. 30 Sekunden vergehen.

Es ist daher ein weiterer Gegenstand der vorliegenden Erfindung, dass nach Aufbringen des Polymers und stapeln, falten, aufrollen oder anderweitigem kompaktieren des Gegenstandes mit weiteren mit der ablösbaren Schutzschicht versehenen Gegenstände eine Zeitspanne von mindestens 30 Sekunden, vorzugsweise 60 bis 120 Sekunden, vergeht.

Bei dem Gegenstand kann es sich prinzipiell um jedes halbfertige oder fertige Werkstück handeln. Vorzugsweise handelt es sich bei dem Gegenstand um ein profiliertes Werkstück oder ein Werkstück mit bereits fertig veredelter Oberfläche. Hierbei kann es sich um einen Gegenstand handeln, der mit anderen Gegenständen zu einem späteren Zeitpunkt verbunden wird.

Der Gegenstand kann auch aus mehreren Komponenten aufgebaut sein. Es ist lediglich erforderlich, dass der Gegenstand zumindest teilweise eine Kunststoffoberfläche aufweist. So sind für Materialien, die den Kunststoff bilden, keine Grenzen gesetzt. Der Gegenstand kann somit Materialien wie Holz, Stein, Metall, Kunststoff, Keramik, Papier oder dergleichen enthalten.

In einer bevorzugten Ausführungsform weist der Gegenstand eine Folie auf, die eine entsprechende Kunststoffoberfläche besitzt. Diese kann gemäß der vorliegenden Erfindung mit einer Schutzschicht versehen werden. Bei der Folie kann es sich insbesondere um eine Dekorfolie handeln. Solche Dekorfolien sind im Stand der Technik bekannt. Die Kunststoffoberfläche kann die Oberfläche eines beliebigen Kunststoffs sein. Beispielsweise handelt es sich bei dem Kunststoff um PVC, Acrylat oder andere Kunststoffe. In einer bevorzugten Ausführungsform weist die Kunststoffoberfläche zumindest teilweise Polymethylmethacrylat (PMMA) auf.

Dieses Material wird in handelsüblichen Dekorfolien verwendet. Ein Beispiel hierfür ist die Renolit-Folie MBASII.

Wie bereits oben ausgeführt wurde, handelt es sich bei einer bevorzugten Ausführungsform der vorliegenden Erfindung bei dem Gegenstand um eine Folie. Diese Folie weist entsprechend eine Kunststoffoberfläche auf. Es ist daher nicht erforderlich, dass die Folie ausschließlich aus Kunststoff besteht. Sie kann beispielsweise auch mehrschichtig aufgebaut sein, wobei lediglich die zu schützende Oberfläche eine Kunststoffoberfläche darstellt. Weitere Materialien, die die Folie enthalten kann, sind Metall (Bleche), Furnierholz, Papier, Pappe oder ähnliche Materialien. Das Aufbringen des heiß-flüssigen Polymers kann derart erfolgen, dass nur die Folie entsprechend mit dem Polymer versehen wird. Anschließend kann beispielsweise die Folie wieder aufgerollt werden, um sie einer späteren Verwendung zuzuführen.

Darüber hinaus ist es jedoch ebenfalls möglich, dass zunächst ein weiterer Gegenstand mit der Folie versehen wird, bevor diese mit einer Schutzschicht versehen wird.

Hierbei kann die Folie beispielsweise zur Ummantelung eines Werkstücks dienen.

Ein weiterer Gegenstand der vorliegenden Erfindung liegt somit darin, dass die Folie beim Aufbringen des Polymers als solche oder als Ummantelung eines Werkstücks vorliegt.

Die Kunststoffoberfläche kann ebenfalls Bestandteil einer Lackschicht sein. Hierbei ist jedoch ebenfalls lediglich erforderlich, dass diese Lackschicht eine Oberfläche aufweist, die aus Kunststoff besteht.

Ein weiterer Gegenstand der vorliegenden Erfindung ist ein Verfahren nach Anspruch 13.
- Ablösen der Schutzschicht von der Kunststoffoberfläche des Gegenstandes.

Hierbei hat sich insbesondere gezeigt, dass die Schutzschicht durch einfaches Abziehen entfernt werden kann.

Hierbei ist von Vorteil, wenn die Schutzschicht einstückig entfernt beziehungsweise abgelöst wird, ohne dass Rückstände auf der Kunststoffoberfläche verbleiben. Dadurch ist es möglich, die Schutzschicht in einem Arbeitsschritt zu entfernen.

In einer bevorzugten Ausführungsform erfolgt das Entfernen der Schutzschicht in einem Arbeitsschritt.

Das Ablösen der Schutzschicht kann beispielsweise dadurch erleichtert werden, dass beim Aufbringen des Polymers auf die Oberfläche gewährleistet ist, dass etwaige die Oberfläche begrenzenden Ränder mit einem Überhang an Polymer versehen sind, wobei diese Überhänge dann als Angriffsfläche zum Ablösen dienen können.

Weiterhin können bestimmte Stellen der Kunststoffoberfläche oder angrenzenden Flächen zunächst mit einem nicht haftenden oder lösbar haftenden Schutzmittel versehen sein, wobei dann der Film auf der Schutzmitteloberfläche haftet und von dieser oder mit dieser später abgelöst werden kann, wodurch sich ebenfalls entsprechend geeignete Angriffsflächen ergeben. Bei diesem Schutzmittel kann es sich um einen Folienstreifen, einen Klebstreifen, ' einen Papierstreifen oder ähnliches handeln. Die Geometrie dieses Schutzmittels ist beliebig wählbar. Die Dimensionen sollten jedoch möglichst klein gewählt werden, um die Vorteile der vorliegenden Erfindung nicht zu schmälern.

Schließlich ist ein Gegenstand der vorliegenden Erfindung die Verwendung nach Anspruch 15.

### Beispiel

Ein Prüfstück in Form eines mit einer MBASII Folie ummantelten Fensterprofils wird mittels Heißrakeln mit einer Schutzschicht des Polyurethan-basierten Polymers PUR SK HC 717 der Fa. Klebchemie M.B. Becker-GmbH & Co KG, Weingarten (DE) versehen. Die Auftragstemperatur beträgt dabei 120 °C. Die Auftragsmenge beträgt 100 g/m².

Die so geschützte Folienoberfläche des Prüfstückes wird einem beschleunigten Bewitterungstest (Klimaschrank) ausgesetzt.

Der Schutzfilm (beziehungsweise die Schutzschicht) kann anschließend leicht abgezogen werden. IR-spektroskopisch kann nachgewiesen werden, dass keine Rückstände auf der Folienoberfläche verbleiben.

Ebenso zeigt die Langzeitwärmelagerung, eine Wärme/Kälte-Prüfung sowie eine QUV-Prüfung die gute Eignung des verwendeten Polymers als Schutzschicht.

## Patentansprüche

1. Verfahren zur Erzeugung einer ablösbaren Schutzschicht auf der Kunststoffoberfläche eines Gegenstandes die Schritte enthaltend
(a) Aufbringen eines heiß-flüssigen, bei Raumtemperatur festen, einen Film bildenden Polymers auf die zu schützende Kunststoffoberfläche und
(b) auf Raumtemperatur abkühlen und aushärten lassen des Polymers,
wobei der Gegenstand ein profiliertes Werkstück oder ein Werkstück mit bereits fertig veredelter Oberfläche ist und wobei das Polymer ein Polymer auf Basis eines feuchtigkeitsvemetzenden Polyurethans ist.

2. Verfahren gemäß Anspruch 1, **dadurch gekennzeichnet, dass** das Polymer mit Hilfe einer Walze, eines Rakels oder einer Schlitzdüse, durch Aufsprühen oder mit Hilfe eines Transfermittels erfolgt.

3. Verfahren gemäß Anspruch 1 oder 2, **dadurch gekennzeichnet, dass** die Schutzschicht eine mittlere Schichtstärke im Bereich von 20 bis 150 µm aufweist.

4. Verfahren gemäß einem der Ansprüche 1 bis 3, **dadurch gekennzeichnet, dass** das Polymer beim Aufbringen auf die zu schützende Kunststoffoberfläche eine Temperatur im Bereich vom 80 °C bis 190 °C aufweist.

5. Verfahren gemäß einem der Ansprüche 1 bis 4, **dadurch gekennzeichnet, dass** der Gegenstand beim Abkühlen und Aushärten der Raumluftfeuchtigkeit und -temperatur ausgesetzt ist.

6. Verfahren gemäß einem der Ansprüche 1 bis 5, **dadurch gekennzeichnet, dass** nach Aufbringen des Polymers und stapeln, falten, aufrollen oder anderweitigem kompaktieren des Gegenstandes mit weiteren mit der ablösbaren Schutzschicht versehenen Gegenstände eine Zeitspanne von mindestens 30 Sekunden vergeht.

7. Verfahren gemäß einem der Ansprüche 1 bis 6, **dadurch gekennzeichnet, dass** der Gegenstand eine Folie ist.

8. Verfahren gemäß Anspruch 7, **dadurch gekennzeichnet, dass** die Kunststoffoberfläche zumindest teilweise Polymethylmethacrylat (PMMA) enthält.

9. Verfahren gemäß Anspruch 7 oder 8, **dadurch gekennzeichnet, dass** die Folie eine Dekorfolie darstellt.

10. Verfahren gemäß einem der Ansprüche 7 bis 9, **dadurch gekennzeichnet, dass** die Folie beim Aufbringen des Polymers als solche oder als Ummantelung eines Werkstückes vorliegt.

11. Verfahren gemäß einem der Ansprüche 1 bis 10, **dadurch gekennzeichnet, dass** die Kunststoffoberfläche Bestandteil einer Lackschicht ist.

12. Gegenstand mit einer mit einer ablösbaren Schutzschicht versehenen Kunststoffoberfläche, wobei die Schutzschicht ein in heißem Zustand flüssiges und bei Raumtemperatur festes, ein Film bildendes Polymer enthält, wobei der Gegenstand ein profiliertes Werkstück oder ein Werkstück mit bereits fertig veredelter Oberfläche ist und wobei das Polymer ein Polymer auf Basis eines feuchtigkeitsvemetzenden Polyurethans ist.

13. Verfahren zum Entfernen einer nach einem der Ansprüche 1 bis 11 aufgebrachten ablösbaren Schutzschicht oder einer Schutzschicht nach Anspruch 12 von der Kunststoffoberfläche eines Gegenstandes den Schritt enthaltend
- Ablösen der Schutzschicht von der Kunststoffoberfläche des Gegenstandes.

14. Verfahren nach Anspruch 13, **dadurch gekennzeichnet, dass** das Ablösen in einem Arbeitsschritt erfolgt.

15. Verwendung eines heiß-flüssigen, bei Raumtemperatur festen, einen Film bildenden Polymers zur Erzeugung einer ablösbaren Schutzschicht auf der Kunststoffoberfläche eines Gegenstandes, wobei der Gegenstand ein profiliertes Werkstück oder ein Werkstück mit bereits fertig veredelter Oberfläche ist und wobei das Polymer ein Polymer auf Basis eines feuchtigkeitsvemetzenden Polyurethans ist.

## Claims

1. Method of producing a detachable protective layer on the plastics surface of an article, comprising the steps of
(a) applying a hot-liquid, room-temperature-solid, film-forming polymer to the plastics surface to be protected, and
(b) cooling the polymer to room temperature and allowing it to harden,
the article being a profiled workpiece or a workpiece having a surface which has already been finished, and the polymer being a polymer based on a moisture-crosslinking polyurethane.

2. Method according to Claim 1, **characterized in that** the applying of the polymer takes place with the aid of a roller, a doctor blade or a slot die, by spraying or with the aid of a transfer agent.

3. Method according to Claim 1 or 2, **characterized in that** the protective layer has an average layer thickness in the range from 20 to 150 µm.

4. Method according to any of Claims 1 to 3, **characterized in that** the polymer on application to the plastics surface to be protected has a temperature in the range from 80°C to 190°C.

5. Method according to any of Claims 1 to 4, **characterized in that** the article on cooling and hardening is subject to ambient air humidity and ambient air temperature.

6. Method according to any of Claims 1 to 5, **characterized in that** between application of the polymer and stacking, folding, rolling or other compacting of the article with other articles provided with the detachable protective layer, a period of at least 30 seconds elapses.

7. Method according to any of Claims 1 to 6, **characterized in that** the article is a foil.

8. Method according to Claim 7, **characterized in that** the plastics surface at least partly comprises polymethyl methacrylate (PMMA).

9. Method according to Claim 7 or 8, **characterized in that** the foil represents a decorative foil.

10. Method according to any of Claims 7 to 9, **characterized in that** the foil on application of the polymer is present as such or as the wrapping of a workpiece.

11. Method according to any of Claims 1 to 10, **characterized in that** the plastics surface is a constituent of a layer of coating material.

12. Article having a plastics surface provided with a detachable protective layer, the protective layer comprising a film-forming polymer which is liquid in the hot state and solid at room temperature, the article being a profiled workpiece or a workpiece having a surface which has already been finished, and the polymer being a polymer based on a moisture-crosslinking polyurethane.

13. Method of removing a detachable protective layer applied according to any of Claims 1 to 11, or a protective layer according to Claim 12, from the plastics surface of an article, comprising the step of
- detaching the protective layer from the plastics surface of the article.

14. Method according to Claim 13, **characterized in that** the detaching takes place in one workstep.

15. Use of a hot-liquid, room-temperature-solid, film-forming polymer for producing a detachable protective layer on the plastics surface of an article, the article being a profiled workpiece or a workpiece having a surface which has already been finished, and the polymer being a polymer based on a moisture-crosslinking polyurethane.

## Revendications

1. Procédé de formation d'une couche de protection amovible sur la surface plastique d'un objet, contenant les étapes consistant à
(a) appliquer un polymère filmogène liquide à chaud et solide à température ambiante sur la surface plastique à protéger et
(b) refroidir à température ambiante et laisser durcir le polymère,
l'objet étant une pièce profilée ou une pièce à surface déjà finie, et le polymère étant un polymère à base d'un polyuréthanne réticulant à l'humidité.

2. Procédé selon la revendication 1, **caractérisé en ce que** l'application du polymère a lieu à l'aide d'un cylindre, d'une racle ou d'une buse à fente, par pulvérisation ou l'aide d'un agent de transfert.

3. Procédé selon la revendication 1 ou 2, **caractérisé en ce que** la couche de protection présente une épaisseur de couche moyenne dans la plage allant de 20 à 150 µm.

4. Procédé selon l'une quelconque des revendications 1 à 3, **caractérisé en ce que** le polymère présente une température dans la plage allant de 80 °C à 190 °C lors de l'application sur la surface plastique à protéger.

5. Procédé selon l'une quelconque des revendications 1 à 4, **caractérisé en ce que** l'objet est exposé à l'humidité et la température ambiantes lors du refroidissement et du durcissement.

6. Procédé selon l'une quelconque des revendications 1 à 5, **caractérisé en ce qu'**une durée d'au moins 30 secondes s'écoule entre l'application du polymère et l'empilement, le pliage, l'enroulement ou autre compactage de l'objet avec d'autres objets munis de la couche de protection amovible.

7. Procédé selon l'une quelconque des revendications 1 à 6, **caractérisé en ce que** l'objet est une feuille.

8. Procédé selon la revendication 7, **caractérisé en ce que** la surface plastique contient au moins partiellement du méthacrylate de polyméthyle (PMMA).

9. Procédé selon la revendication 7 ou 8, **caractérisé en ce que** la feuille est une feuille décorative.

10. Procédé selon l'une quelconque des revendications 7 à 9, **caractérisé en ce que** lors de l'application du polymère, la feuille se présente en tant que telle ou en tant que revêtement d'une pièce.

11. Procédé selon l'une quelconque des revendications 1 à 10, **caractérisé en ce que** la surface plastique est un composant d'une couche de laque.

12. Objet comprenant une surface plastique munie d'une couche de protection amovible, la couche de protection contenant un polymère filmogène liquide à l'état chaud et solide à température ambiante, l'objet étant une pièce profilée ou une pièce à surface déjà finie, et le polymère étant un polymère à base d'un polyuréthanne réticulant à l'humidité.

13. Procédé d'élimination d'une couche de protection amovible appliquée selon l'une quelconque des revendications 1 à 11 ou d'une couche de protection selon la revendication 12 de la surface plastique d'un objet, contenant l'étape consistant à:
- décoller la couche de protection de la surface plastique de l'objet.

14. Procédé selon la revendication 13, **caractérisé en ce que** le décollement a lieu en une étape.

15. Utilisation d'un polymère filmogène liquide à chaud et solide à température ambiante pour la formation d'une couche de protection amovible sur la surface plastique d'un objet, l'objet étant une pièce profilée ou une pièce à surface déjà finie, et le polymère étant un polymère à base d'un polyuréthanne réticulant à l'humidité.
